# EUROPÄISCHE PATENTSCHRIFT

(11) **EP 1 496 420 B1**
(45) Veröffentlichungstag und Bekanntmachung des Hinweises auf die Patenterteilung: **04.07.2007**
(21) Anmeldenummer: 04104676.4
(22) Anmeldetag: 22.05.2000
(51) Int. Cl.: G06F 21/00, G06F 9/38, G07F 7/10

(54) **Sicherheits-Datenverarbeitungseinheit sowie dazugehöriges Verfahren**
Security data processing unit and method therefor
Unité de traitement de données et méthode associée

(43) Veröffentlichungstag der Anmeldung: 12.01.2005
(62) Teilanmeldung aus: 00110838.0
(73) Patentinhaber: Infineon Technologies AG, 81669 München (DE)
(72) Erfinder: May, Christian, 81677 München (DE)
(74) Vertreter: Karl, Frank

(56) Entgegenhaltungen:
- EP-A- 0 404 559
- EP-A- 1 118 924
- DE-A- 19 936 939
- US-A- 5 944 833
- "SECTION 1: INTRODUCTION" DATA BOOK SOFT MICROCONTROLLER,XX,XX, 6. Oktober 1993 (1993-10-06), Seiten 1-03,7-08,73,77-80,82,229,290--292, XP002020287
- HOLLMANN H D L ET AL: "Protection of software algorithms executed on secure modules" FUTURE GENERATIONS COMPUTER SYSTEMS, ELSEVIER SCIENCE PUBLISHERS. AMSTERDAM, NL, Bd. 13, Nr. 1, Juli 1997 (1997-07), Seiten 55-63, XP004081709 ISSN: 0167-739X

## Beschreibung

Die vorliegende Erfindung bezieht sich auf eine Sicherheits-Datenverarbeitungseinheit sowie ein dazugehöriges Verfahren und insbesondere auf eine Sicherheits-Datenverarbeitungseinheit sowie ein dazugehöriges Verfahren, welches eine kryptographische Verschlüsselung und/oder Zugangsberechtigung vor unerlaubten externen Lauschangriffen schützt.

Durch die zunehmende Verbreitung von beispielsweise kryptographischen Systemen zur elektronischen Verschlüsselung von sicherheitsrelevanten Daten und/oder zur elektronischen Zugangsberechtigung in sicherheitsrelevanten Bereichen besteht zunehmend der Bedarf nach Sicherheits-Datenverarbeitungseinheiten, die insbesondere gegenüber externen Angriffen wie z.B. Lauschangriffen geschützt sind.

Die meisten kryptographischen Systeme benötigen eine sichere Behandlung der bei der kryptographischen Verarbeitung verwendeten Schlüssel. In Sicherheitssystemen mit sogenannten öffentlichen Schlüsseln (public-keys) müssen die dazugehörigen privaten Schlüssel (private-keys) derart geschützt sein, dass mögliche Angreifer den oder die Schlüssel auf keinen Fall lesen bzw. entziffern können, da ansonsten beispielsweise digitale Signaturen gefälscht, Daten modifiziert und geheime Informationen dechiffriert werden können.

Im wesentlichen unterscheidet man hierbei zwischen symmetrischen und asymmetrischen Algorithmen bzw. kryptographischen Protokollen, mit deren Hilfe ein unerwünschter Datenangriff auf vertrauliche oder geheime Daten verhindert werden kann.

Beispielsweise müssen kryptographische Kodiervorrichtungen zur Realisierung einer Verschlüsselung und/oder einer Zugangsberechtigung ihre geheimen Schlüssel selbst dann sicher schützen, wenn sie sich in einer angreifbaren Umgebung befinden. Als derartige kryptographische Kodiervorrichtungen mit dazugehörigen Datenverarbeitungseinheiten sind beispielsweise sogenannte Chipkarten, Smartcards, oder sicherheitsrelevante Module bekannt, die beispielsweise bei Geldautomaten, KFZ-Wegfahrsperren, usw. eine gesicherte Zugangsberechtigung und/oder eine gesicherte Verschlüsselung von Daten ermöglichen.

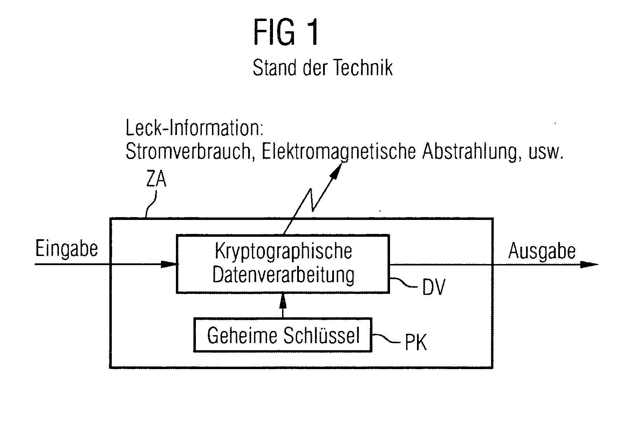

Figur 1 zeigt eine schematische Darstellung einer derartigen Kodiervorrichtung bzw. eines Zustandsautomaten ZA zur Realisierung beispielsweise einer kryptographischen Verschlüsselung und/oder Zugangsberechtigung, die im wesentlichen aus einer kryptographischen Datenverarbeitungseinheit DV besteht und eine Eingabe bzw. eingegebene Daten beispielsweise unter Verwendung eines geheimen Schlüssels PK (private key) kryptographisch verarbeitet. Die von der Datenverarbeitungseinheit DV verarbeiteten Daten werden anschließend an einer Ausgabe ausgegeben, wodurch die kryptographische Verschlüsselung und/oder eine gesicherte Zugangsberechtigung realisiert wird.

Der in Figur 1 dargestellte Zustandsautomat ZA wird beispielsweise als Chipkarte, Smartcard, gesicherte Mikroprozessoreinheit oder dergleichen realisiert. Demzufolge verwendet die kryptographische Kodiervorrichtung ZA den geheimen Schlüssel PK zum Verarbeiten von eingegebenen Informationen und zum Ausgeben bzw. Erzeugen von Informationen, wobei die kryptographischen Algorithmen bzw. die Protokolle üblicherweise derart entworfen sind, dass ein Angriff auf die zu verschlüsselnden oder geheimen Daten an der Eingabe- oder Ausgabeschnittstelle abgewehrt werden kann. Es hat sich jedoch herausgestellt, dass wesentlich wirkungsvollere externe Angriffe auf kryptographische Datenverarbeitungseinheiten bzw. die darin abgearbeiteten Kodierverfahren und deren geheime Schlüssel auch über sogenannte Leck-Informationen erfolgen können. Gemäß Figur 1 sind dies beispielsweise ein Stromverbrauch, eine elektromagnetische Abstrahlung oder dergleichen, die bei der kryptographischen Datenverarbeitung Rückschlüsse über die verwendeten geheimen Schlüssel bzw. das verwendete kryptographische Verfahren ermöglichen.

Die vorliegende Erfindung beschäftigt sich hierbei insbesondere mit einem Angriff über eine sogenannte statistische Analyse von physikalischen Signalen wie beispielsweise einem Stromprofil der Datenverarbeitungseinheit DV. Bei der Analyse eines Stromprofils der Datenverarbeitungseinheit DV wird hierbei der Umstand ausgenutzt, dass integrierte Schaltungen aus einer Vielzahl von einzelnen Transistoren bestehen, die im wesentlichen als spannungsgesteuerte Schalter arbeiten. Hierbei fließt beispielsweise Strom über ein Transistorsubstrat, sobald Ladungen an einem Gate angelegt oder entfernt werden. Dieser Strom liefert wiederum Ladungen an die Gates von weiteren Transistoren, wodurch wiederum weitere Verdrahtungsabschnitte oder Lasten geschaltet werden. Ein derartiges Schaltverhalten, das insbesondere auch beim Abarbeiten von kryptographischen Algorithmen durchgeführt wird, ist daher über die Stromversorgung der Datenverarbeitungseinheit DV bzw. des Zustandsautomaten ZA meßbar und ermöglicht Angreifern beispielsweise das Lesen des geheimen Schlüssels PK.

Die bekanntesten Stromprofilanalysen sind hierbei die einfache Stromprofilanalyse (simple power analysis, SPA), die differentielle Stromprofilanalyse (differential power analysis, DPA) und die differentielle Stromprofilanalyse höherer Ordnung (high-order differential power analysis, HO-DPA). Während die einfache Stromprofilanalyse SPA im wesentlichen eine visuelle Überwachung der Schwankungen im Stromverbrauch berücksichtigt, verwenden Angriffe mittels der differentiellen Stromprofilanalyse DPA statistische Analyseverfahren sowie Fehlerkorrekturverfahren zum Extrahieren von Informationen, die mit geheimen Schlüsseln korreliert sind. Differentielle Stromprofilanalysen höherer Ordnung (HO-DPA) verbessern die Möglichkeiten eines Angriffs zum Extrahieren von geheimen Schlüsseln mittels eines meßbaren Stromverbrauchs, wobei jedoch die differentielle Stromprofilanalyse in den meisten Fällen zum "Abhören" der verarbeiteten Daten bereits ausreicht.

Zur Verhinderung derartiger Angriffe auf Datenverarbeitungseinheiten in sicherheitsrelevanten Einsatzgebieten ist beispielsweise aus der Druckschrift WO 99/35782 ein kryptographisches Verfahren und eine kryptographische Vorrichtung bekannt, mittels derer die genannten Stromprofilanalysen unwirksam werden. Im wesentlichen ist hierbei ein Verfahren und eine Vorrichtung beschrieben, bei dem sich durch ständiges Ändern der für die kryptographische Datenverarbeitung wesentlichen Schritte die für einen Angreifer lesbare Leck-Information sozusagen "selbstheilend" auslöscht. Dadurch werden insbesondere statistische Auswertungen verhindert und ein Angriff über beispielsweise den Stromverbrauch einer Datenverarbeitungseinheit DV bzw. über elektromagnetische Abstrahlung zuverlässig verhindert.

Nachteilig bei einer derartigen Realisierung eines Angriffsschutzes ist jedoch die Tatsache, dass schwerwiegende Eingriffe in die kryptographische Software des Systems bzw. der dazugehörigen Datenverarbeitungseinheit vorgenommen werden müssen. Genauer gesagt kann ein derartiger Schutz nur in Kenntnis der jeweiligen kryptographischen Algorithmen bzw. Protokolle durchgeführt werden, die entsprechend abgeändert werden oder sich gegebenenfalls selbständig abändern. Ein derartiger Eingriff in die unmittelbare Software der kryptographischen Datenverarbeitung erfordert jedoch einen außerordentlich hohen Aufwand, ist darüber hinaus nur von Experten zu realisieren und von jeweiligen Benutzern (Kunden) oftmals nicht erwünscht, da ein derartiger Hersteller wiederum die Kenntnis zum Brechen des Schutzes besitzt.

Als weitere Möglichkeit zur Verhinderung derartiger Angriffe können ferner sogenannte zusätzliche Stromprofilgeneratoren verwendet werden, die einem für die Stromprofilanalyse nutzbaren Stromprofil ein Störstromprofil überlagern und somit zumindest eine einfache Stromprofilanalyse verhindern. Ein Schutz gegenüber differentieller Stromprofilanalyse bzw. einer Stromprofilanalyse höherer Ordnung ist jedoch dadurch nicht zu erreichen.

Aus der deutschen Offenlegungsschrift DE 199 36 939 A1 ist eine Datenverarbeitungseinheit zum Verhindern einer differentiellen Stromverbrauchsanalyse bekannt, die Dummyberechnungen durchführt. Aus dem Data Book Soft Microcontroller (Dallas Semiconductor DS 5002FP), Section 1: Introduction, XX, XX, 06. Oktober 1993 (1993-10-06), Seiten 1 bis 3, 7, 8, 73, 77 bis 80, 82, 229, 290 bis 292, XP 002020287, sind für einen Mikrocontroller Dummy-Bus-Zugriffe bekannt. Natürlich sind die Dummyzugriffe immer Leseoperationen, weil die Dummyadresse gültige Daten enthalten könnte.

Der Erfindung liegt daher die Aufgabe zugrunde, eine Sicherheits-Datenverarbeitungseinheit zu schaffen, die ohne Modifikation von kryptographischen Programmen externe Lauschangriffe zuverlässig verhindert.

Erfindungsgemäß wird diese Aufgabe hinsichtlich der Sicherheits-Datenverarbeitungseinheit durch die Merkmale des Patentanspruchs 1 und hinsichtlich des Verfahrens durch die Maßnahme des Patentanspruchs 9 gelöst.

Insbesondere durch die Verwendung eines Leerfunktionsgenerators zum Erzeugen von Leerfunktionen in der Datenverarbeitungseinheit und erforderlichenfalls eines Leerfunktionskompensators zum Kompensieren der erzeugten Leerfunktionen in der Datenverarbeitungseinheit erhält man eine Desynchronisation des Instruktions- bzw. Befehlsablaufs für unterschiedliche Anfangsdaten eines jeweiligen kryptographischen Entschlüsselungsprozesses. Ein Auffinden von Triggerpunkten in den Stromprofilen der Datenverarbeitungseinheit kann dadurch zuverlässig verhindert werden, wodurch eine Stromprofilanalyse mittels Resynchronisation von Datensätzen in ihrem zeitlichen Verlauf erschwert bzw. verhindert wird.

Vorzugsweise werden durch den Leerfunktionskompensator Schreibvorgänge auf von Programmen nutzbare Register/Speicherstellen verhindert, wodurch sich eine besonders einfache Kompensation der erzeugten Leerfunktionen ergibt und keine Beeinflussung eines effektiven Programmflusses verursacht wird.

Zur Verbesserung eines Schutzes gegen externe Angriffe können vom Leerfunktionsgenerator Leerbefehle in Form von erlaubten Programmbefehlen erzeugt werden. Ein Erfassen dieser Leerbefehle ist hierbei besonders schwierig.

Alternativ oder zusätzlich kann der Leerfunktionsgenerator einen Leersequenzgenerator aufweisen, welcher zusätzlich zu benötigten Funktionsstufen nicht genutzte Funktionsstufen in einer Befehlsleitung aktiviert. Auf diese Weise können über Aktivierungsleckinformationen (Ströme) von jeweiligen Funktionsstufen keine Rückschlüsse auf einen jeweils verarbeiteten Befehl geschlossen werden.

In ähnlicher Weise kann zusätzlich oder alternativ der Leerfunktionsgenerator einen Leer-Lese/Schreib-Generator zum Erzeugen von zusätzlichen Lese/Schreib-Vorgängen auf schnelle Daten-/Programmbefehls-Zwischenspeicher aufweisen, wodurch besonders einfach zu erfassende Leckinformationen eines Speicherbusses unbrauchbar gemacht werden können.

Eine Zufallssteuerung zum zufälligen Ansteuern des Leerfunktionsgenerator kann hierbei sowohl eine echte Zufälligkeit als auch eine Pseudozufälligkeit (deterministisch) aufweisen und wahlweise ein- oder ausschaltbar sein.

In den weiteren Unteransprüchen sind weitere vorteilhafte Ausgestaltungen der Erfindung gekennzeichnet.

Die Erfindung wird nachstehend anhand von Ausführungsbeispielen unter Bezugnahme auf die Zeichnung näher beschrieben.

Es zeigen:
- Figur 1: eine schematische Darstellung zur Veranschaulichung eines Angriffs über Leck-Informationsanalyse gemäß dem Stand der Technik; und
- Figur 2: eine vereinfachte Blockdarstellung eines Teils der erfindungsgemäßen Sicherheits-Datenverarbeitungseinheit.

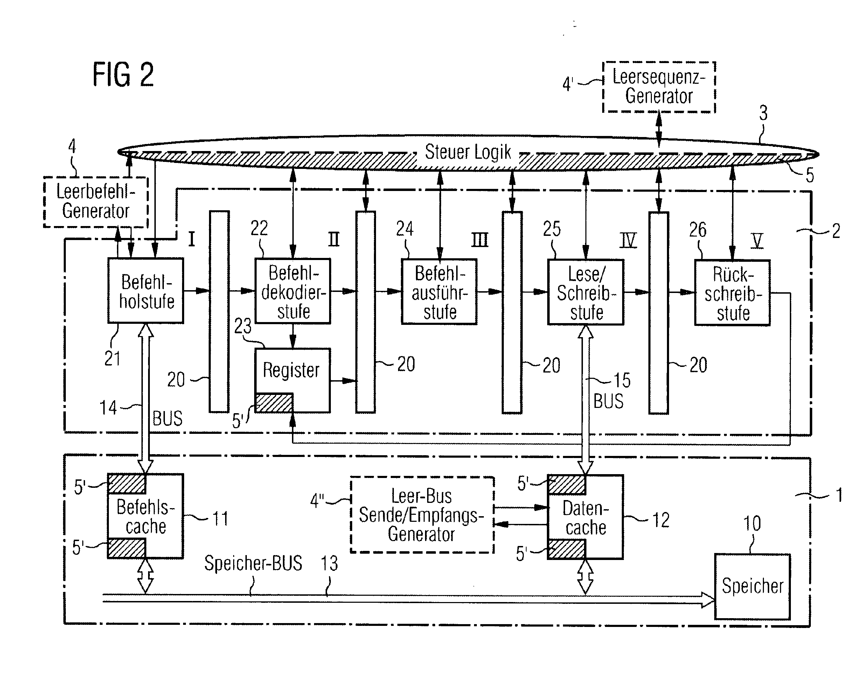

Figur 2 zeigt eine vereinfachte Blockdarstellung eines Teils einer Sicherheits-Datenverarbeitungseinheit DV gemäß der vorliegenden Erfindung, wobei zur Vereinfachung eine Vielzahl von weiteren wesentlichen Teilen der Sicherheits-Datenverarbeitungseinheit nicht dargestellt sind.

Der in Figur 2 dargestellte Teil der erfindungsgemäßen Sicherheits-Datenverarbeitungseinheit besitzt im wesentlichen einen Daten-/Programmbefehlsspeicher 1 zum Speichern von Daten und Programmbefehlen. Der Daten-/Programmbefehlsspeicher 1 besitzt gemäß Figur 2 einen schnellen Programmbefehl-Zwischenspeicher bzw. Befehlscache 11 sowie einen schnellen Daten-Zwischenspeicher bzw. -cache 12 die über einen Speicherbus 13 mit einem herkömmlichen (langsamer Zugriff) Speicher 10 in Verbindung stehen.

Ferner besitzt die Sicherheits-Datenverarbeitungseinheit zumindest eine Befehlsleitung bzw. Pipeline 2 mit einer Vielzahl von Funktionsstufen bzw. Pipeline-Stufen I bis V zum Verarbeiten der Daten/Programmbefehle. Die schnellen Daten-/Programmbefehls-Zwischenspeicher 11 und 12 dienen demzufolge als Busanpassung zwischen der Befehlsleitung 2 und dem Speicher 10. Gemäß Figur 2 besitzt die Befehlsleitung 2 eine Befehlsholstufe 21, mittels der über einen Befehlsbus 14 und den schnellen Programmbefehlsspeicher 11 Programmbefehle nacheinander aus dem Speicher 10 geholt werden. Anschließend werden die Programmbefehle über einen Zwischenspeicher 20 einer Befehlsdekodierstufe 22 zugeführt, wobei gleichzeitig eine Steuereinheit 3 dazugehörige Steuerinformationen erhält. Die Steuereinheit 3 dient im wesentlichen einer Steuerung der Vielzahl von Funktionsstufen I bis V der Befehlsleitung 2 und steuert eine Abarbeitung des geholten Programmbefehls über die weiteren Funktionsstufen.

Beispielsweise kann die Steuereinheit 3 eine Addition von Registern 23 aus der Funktionsstufe II über einen weiteren Zwischenspeicher 20 in einer nachfolgenden Befehlausführstufe 24 anordnen. Nachdem ein Ergebnis dieser Addition über einen weiteren Zwischenspeicher 20 an eine Lese/Schreistufe 25 weitergereicht wurde, kann die Steuereinheit 3 ein Laden eines Wertes an einer Adresse des berechneten Ergebnisses aus dem Speicher 10 über eine Datenbus 15 und den schnellen Daten-Zwischenspeicher 12 anweisen. Für bestimmte Funktionen kann ferner dieses Ergebnis zur erneuten Verarbeitung über einen weiteren Zwischenspeicher 20 und eine Rückschreibstufe 26 an das Register 23 der Funktionsstufe II zurückgeschrieben werden. Die Zwischenspeicher bzw. -register 20 dienen hierbei einer Entkopplung der jeweiligen Verarbeitungs- bzw. Funktionsstufen I bis V, wodurch eine gleichzeitige Abarbeitung von Daten/Programmbefehlen in den jeweiligen Stufen ermöglicht wird.

Da sowohl ein Programmbefehl und eine Datenverarbeitung in jeder dieser Funktionsstufen als auch ein Daten-/Programmbefehltransport über einen der Busse 13, 14 und 15 zu auswertbaren charakteristischen (optischen, elektrischen, elektromagnetischen) Lecksignalen führt, können diese Signale mittels der eingangs beschriebenen SPA- und DPA-Angriffe erfasst und analysiert werden. Ein DPA-Angriff basiert hierbei im wesentlichen auf einer zeitlichen Korrelationsanalyse zwischen ablaufendem Programmcode und dem dazugehörigen Profil des Lecksignals, wodurch auf verarbeitete Datengeheimnisse rückgeschlossen werden kann. Die Korrelation wird hierbei über viele Messungen ermittelt.

Zur Verhinderung eines derartigen DPA-Angriffs bzw. einer Korrelationsanalyse besitzt die erfindungsgemäße Sicherheits-Datenverarbeitungseinheit einen Leerfunktionsgenerator zum Erzeugen von Leerfunktionen und erforderlichenfalls einen Leerfunktionskompensator zum nachfolgenden Kompensieren der erzeugten Leerfunktionen in der Datenverarbeitungseinheit.

### Erstes Ausführungsbeispiel

Gemäß einem ersten Ausführungsbeispiel wird der Leerfunktionsgenerator durch einen Leerbefehlgenerator 4 realisiert, der Leerbefehle erzeugt und unmittelbar in die Befehlholstufe 21 einschleust. Im einfachsten Fall können hierbei sogenannten NOP-Befehle (no operation) oder "wait-state"-Befehle (Warten) eingefügt werden, wobei jedoch das Problem auftritt, dass derartige Befehle aufgrund ihres charakteristischen Lecksignals leicht zu erkennen und herauszufiltern sind. Vorzugsweise werden daher erlaubte Programmbefehle vom Leerbefehlgenerator 4 erzeugt, wie sie auch im abgearbeiteten Programmcode vorkommen können. Der Leerbefehlgenerator 4 erzeugt diese Dummy- bzw. Leerbefehle mittels eines (nicht dargestellten) Zufallsgenerators oder deterministisch. Ferner kann das Erzeugen dieser Leerbefehle durch ein Zwischenspeichern von tatsächlich abzuarbeitenden Programmbefehlen aus der Befehlsholstufe 21 erfolgen, die zu einem späteren Zeitpunkt zufällig oder deterministisch an der Befehlholstufe 21 wieder eingeschleust werden.

Ein derart erzeugter Leerbefehl wird daher von der Befehlsleitung 2 bzw. der Datenverarbeitungseinheit in gleicher Weise abgearbeitet wie ein erlaubter Programmbefehl. Er erzeugt demzufolge auch ähnliche Lecksignale wie die Programmbefehle, wodurch eine Korrelationsanalyse zuverlässig verhindert wird. Um jedoch einen Einfluss der eingefügten Leerbefehle auf den eigentliche Programmabarbeitung zu verhindern, informiert der Leerbefehlgenerator 4 die Steuereinheit 3 darüber, dass die erzeugten Leerfunktionen erforderlichenfalls zu kompensieren sind. Genauer gesagt werden durch einen in der Steuereinheit 3 befindlichen Leerfunktionskompensator 5 Schreibvorgänge auf von Programmen nutzbare Register/Speicherstellen für jeden Leerbefehl verhindert. Eine Beeinflussung der Ergebnisse der gewünschten Programmverarbeitung durch die eingefügten Leerbefehle wird dadurch zuverlässig ausgeschlossen.

Dieses Verhindern von Schreibvorgängen auf von Programmen nutzbare Register/Speicherstellen kann hierbei unmittelbar von dem Leerfunktionskompensator 5 durchgeführt werden, indem die jeweiligen Daten/Programmbefehle unmittelbar vor dem Einschreiben in ein Register/Speicherstelle verworfen werden. Alternativ kann dieses Verhindern von Schreibvorgängen auf von Programmen nutzbare Register/Speicherstellen durch zusätzliche nicht nutzbare Register/Speicherstellen 5' erfolgen, die im Falle von Leerbefehlen beschrieben werden, jedoch von der gewünschten Programmverarbeitung nicht genutzt bzw. ausgewertet werden. Diese nicht nutzbaren Register/Speicherstellen 5' befinden sich beispielsweise im Register 23 und in den schnellen Daten/Programmbefehl-Zwischenspeichern 11 und 12. Sie sind jedoch nicht darauf beschränkt und können sich auch an anderer Stelle in der Sicherheits-Datenverarbeitungseinheit befinden.

Eine Kompensation ist jedoch bei gewissen Befehlen (z.B. NOP) die inhärent den Programmzustand nicht ändern, nicht erforderlich. Insbesondere bei einer Leerfunktion, die eine Addition mit dem Wert "0" darstellt, ist eine Kompensation nicht erforderlich, da trotz Erzeugung eines "Additions-" Lecksignals eine Programmbeeinflussung nicht stattfindet, und ein herausfiltern der Leerfunktion sehr schwierig.

### Zweites Ausführungsbeispiel

Gemäß einem zweiten Ausführungsbeispiel wird der Leerfunktionsgenerator durch einen Leersequenzgenerator 4' realisiert, der zumindest eine zusätzliche nicht benötigte Funktionsstufe der Befehlsleitung 2 aktiviert. Der nachfolgend beschriebene Leersequenzgenerator 4' kann hierbei sowohl alleine als auch in Kombination mit dem vorstehend beschriebenen Leerbefehlgenerator 4 betrieben werden. Zur Vermeidung von Wiederholungen wird hierbei hinsichtlich der Funktionsweise des Leerfunktionskompensators 5 und 5' auf die Beschreibung des ersten Ausführungsbeispiels verwiesen. Eine Kompensation einer Leerfunktion ist nicht generell erforderlich. Z.B. kann in der Befehlsausführstufe statt dem alleinigen weiterreichen eines Datums eine Addition mit 0 als Leerbefehl ausgeführt werden und das Ergebnis zur nächsten Stufe weitergereicht werden.

Gemäß dem vorliegenden zweiten Ausführungsbeispiel kann es bei der Abarbeitung von Befehlen des gewünschten Programmcodes in der Befehlsleitung 2 dazu kommen, dass Teilstufen der Befehlsleitung 2 für einen vorbestimmten Befehl nicht benötigt werden. Beispielsweise kann ein Ergebnis einer Operation in der Lese-/Schreibstufe 25 in den schnellen Daten-Zwischenspeicher 12 oder alternativ über die Rückschreibstufe 26 in das Register 23 eingeschrieben werden. Damit zwei derartig unterschiedliche Befehle mittels DPA-Angriff nicht unterschieden werden können, werden durch den Leersequenzgenerator 4' auch solche Funktionsstufen aktiviert, die für die eigentliche Programmverarbeitung nicht notwendig sind. Es entstehen somit für alle Programmbefehle gleiche Aktivierungs-Lecksignale. Alternativ können jedoch auch nur einzelne nicht benutzte Funktionsstufen einer jeweiligen Befehlsleitung 2 selektiv aktiviert werden, wodurch sich eine weitere Verbesserung einer Dekorrelation und/oder Dekohärenz ergibt.

Eine Ansteuerung des Leersequenzgenerators 4' kann hierbei wiederum rein zufällig oder deterministisch erfolgen. Die Steuerung der Befehlsleitung 2 erfolgt vorzugsweise durch eine Steuerleitung der Steuereinheit 3 oder durch zusätzlich Informationen, die auf den Bussen übertragen werden.

### Drittes Ausführungsbeispiel

Gemäß einem dritten Ausführungsbeispiel wird der Leerfunktionsgenerator durch einen Leer-Bus Sende/Empfangsgenerator 4" realisiert, der zusätzliche Lese/Sendevorgänge auf die Bus-Interface Funktionsblöcke wie beispielsweise die schnellen Daten-/Programmbefehl-Zwischenspeicher 11 und 12 erzeugt. Der nachfolgend beschriebene Leer-Bus Sende/Empfangsgenerator 4'' kann hierbei sowohl alleine als auch in Kombination mit dem vorstehend beschriebenen Leerbefehlgenerator 4 und Leersequenzgenerator 4' betrieben werden. Zur Vermeidung von Wiederholungen wird hierbei hinsichtlich der Funktionsweise des Leerfunktionskompensators 5 und 5' auf die Beschreibung des ersten Ausführungsbeispiels verwiesen.

Eine Kompensation eines Leer-Bus Sende-Befehls ist nicht erforderlich, wenn dieser Sende-Befehl von allen angeschlossenen Bus-Interface Funktionsblöcken wie z.B. Speicher 10 oder Lese/Schreibstufe 25 ignoriert wird.

Gemäß dem vorliegenden dritten Ausführungsbeispiel muss ein Sende/Empfangsvorgang bzw. Lese/Schreibvorgang eines Datums oder Programmbefehls nicht notwendigerweise zu einem Lese/Schreibvorgang im Speicher 10 führen, sondern kann durch das Lesen/Schreiben eines entsprechenden Elements beispielsweise im schnellen Daten-Zwischenspeicher 12 abgeschlossen sein. Der Lese/Schreibvorgang auf den Speicher 10 vom schnellen Daten-Zwischenspeicher 12 wird nur bei Bedarf ausgeführt, wenn ein Datum noch nicht in den schnellen Daten-Zwischenspeicher 12 geladen ist oder daraus entfernt wird. Um die Aktivität von Bus-Interface Funktionsblöcken mittels DPA-Angriffen wie etwa die zu erfassende Speicherzugriffe insbesondere zwischen Speicher 10 und schnellem Daten-Zwischenspeicher 12 zu verschleiern, können durch den Leer-Bus Sende/Empfangsgenerator 4'' zusätzliche Leer-Lese/Schreibvorgänge bzw. Sende/Empfangsvorgänge erzeugt werden.

Wie beim ersten Ausführungsbeispiel kann hierbei zur Vermeidung einer Beeinflussung des eigentlichen Programms entweder ein Buszugriff unmittelbar vor dem physikalischen Schreiben des Register/Speicherstelle abgebrochen oder in ein nicht nutzbares Register/Speicherstelle 5' geschrieben werden. Die Steuerung erfolgt wiederum durch eine Steuerleitung der Steuereinheit 3 oder durch zusätzliche Informationen, die auf den Bussen übertragen werden.

Die Erfindung wurde vorstehend anhand eines Leerfunktionsgenerators beschrieben, der Leerfunktionen in einer Datenverarbeitungseinheit mit einer 5-stufigen Befehlsleitung erzeugt. Die Datenverarbeitungseinheit kann jedoch auch eine Vielzahl von Befehlsleitungen oder eine andersartige Befehlsleitung aufweisen. Ferner wurde der Sende/Empfangsgenerator in Kombination mit schnellen Daten/Programmbefehl-Zwischenspeichern beschrieben, er kann jedoch auch mit Zwischenspeichern für Steuersignale und -befehle betrieben werden.

## Patentansprüche

1. Sicherheits-Datenverarbeitungseinheit mit
einem Daten-/Programmbefehlsspeicher (1) zum Speichern von Daten/Programmbefehlen;
zumindest einer Befehlsleitung (2) mit einer Vielzahl von Funktionsstufen (21-26) zum Verarbeiten der Daten/Programmbefehle; und
einer Steuereinheit (3) zum Steuern der Vielzahl von Funktionsstufen (21-26) der Befehlsleitung (2),
einen Leerfunktionsgenerator (4, 4', 4'') zum Erzeugen von Leerfunktionen in der Datenverarbeitungseinheit,
**dadurch gekennzeichnet, dass** der Leerfunktionsgenerator einen Leerbefehlgenerator (4) zum Erzeugen von Leerbefehlen aufweist, dass der Leerbefehlgenerator (4) einen erlaubten Programmbefehl erzeugt, und dass der Leerbefehlgenerator (4) den erlaubten Programmbefehl aus tatsächlich verarbeiteten Programmbefehlen ableitet,
oder **dadurch gekennzeichnet, dass** der Leerfunktionsgenerator einen Leersequenzgenerator (4') zum Aktivieren von zumindest einer zusätzlichen Funktionsstufe (I - V) der Befehlsleitung (2) aufweist,
oder dass sowohl die Datenverarbeitungseinheit Bus-Interface Funktionsblöcke (11, 12) zum Verbinden von unterschiedlichen Bussystemen (13, 14, 15) aufweist als auch dass der Leerfunktionsgenerator einen Leer-Bus Sende/Empfangs -Generator (4'') zum Erzeugen von zusätzlichen Sende/Empfangs -Vorgängen auf die Bus-Interface Funktionsblöcke (11, 12) aufweist,
**dadurch gekennzeichnet, dass** eine Steuereinheit vorhanden ist die bei einem zusätzlichen Sende/Empfangs-Vorgang einen Buszugriff unmittelbar vor dem physikalischen Schreiben eines Registers/Speicherzelle abbricht, oder dass ein nicht nutzbares Register/Speicherzelle vorhanden ist, in das bei einem zusätzlichen Sende/Empfangs-Vorgang geschrieben wird.

2. Sicherheits-Datenverarbeitungseinheit nach Patentanspruch 1, **dadurch gekennzeichnet, dass** die erzeugten Leerfunktionen inhärent keine Auswirkung auf einen gewünschten Programmablauf haben.

3. Sicherheits-Datenverarbeitungseinheit nach Patentanspruch 1, **gekennzeichnet durch** einen Leerfunktionskompensator (5, 5') zum Kompensieren von erzeugten Leerfunktionen in der Datenverarbeitungseinheit, die inhärent eine Auswirkung auf einen gewünschten Programmablauf haben.

4. Sicherheits-Datenverarbeitungseinheit nach Patentanspruch 3, **dadurch gekennzeichnet, dass** der Leerfunktionskompensator (5, 5') Schreibvorgänge auf von Programmen nutzbare Register/Speicherstellen verhindert.

5. Sicherheits-Datenverarbeitungseinheit nach Patentanspruch 4,
**dadurch gekennzeichnet, dass** der Leerfunktionskompensator (5) einen Teil der Steuereinheit (3) darstellt und für Leerfunktionen Schreibvorgänge in der Datenverarbeitungseinheit unmittelbar verhindert.

6. Sicherheits-Datenverarbeitungseinheit nach Patentanspruch 4, **dadurch gekennzeichnet, dass** der Leerfunktionskompensator (5, 5') einen Teil der Steuereinheit (3) darstellt und von Programmen nicht nutzbare Register/Speicherstellen (5') aufweist, wobei für Leerfunktionen Schreibvorgänge in der Datenverarbeitungseinheit auf die nicht nutzbaren Register/Speicherstellen (5') erfolgen.

7. Sicherheits-Datenverarbeitungseinheit nach Patentanspruch 1, **dadurch gekennzeichnet, dass** die Bus-Interface Funktionsblöcke schnelle Daten-/Programmbefehls-Zwischenspeicher (11, 12) aufweisen.

8. Sicherheits-Datenverarbeitungseinheit nach einem der Patentansprüche 1 bis 7,
**dadurch gekennzeichnet, dass** der Leerfunktionsgenerator (4, 4', 4 ") die Leerfunktionen zufällig oder deterministisch erzeugt.

9. Verfahren zur Sicherung einer Datenverarbeitungseinheit gegen externe Lauschangriffe mit den Schritten:
a) Erzeugen von Leerfunktionen in der Datenverarbeitungseinheit; und
b) Ausführen der Leerfunktionen in der Datenverarbeitungseinheit.
**dadurch gekennzeichnet, dass** in Schritt
a) Leerbefehle erzeugt werden, wobei erlaubte Programmbefehle erzeugt werden, und wobei die erlaubten Programmbefehl aus tatsächlich verarbeiteten Programmbefehlen abgeleitet werden,
oder **dadurch gekennzeichnet, dass** in Schritt a) zusätzliche Funktionsstufen (I - V) einer Befehlsleitung (2) aktiviert werden,
oder dass zusätzliche Leer-Bus Sende/Empfangsvorgänge auf Bus-Interface Funktionsblöcke (11, 12) erzeugt werden
**dadurch gekennzeichnet, dass** ein Buszugriff unmittelbar vor dem physikalischen Schreiben eines Registers/Speicherzelle abgebrochen oder in ein nicht nutzbares Register/Speicherzelle (5') geschrieben wird.

10. Verfahren nach Patentanspruch 9,
**gekennzeichnet durch** den weiteren Schritt: c) Kompensieren der ausgeführten Leerfunktionen in der Datenverarbeitungseinheit.

11. Verfahren nach Patentanspruch 10,
**dadurch gekennzeichnet, dass** in Schritt c) Schreibvorgänge auf von Programmen nutzbare Register /Speicherstellen verhindert werden.

12. Verfahren nach Patentanspruch 11,
**dadurch gekennzeichnet, dass** in Schritt c) Schreibvorgänge in der Datenverarbeitungseinheit unmittelbar verhindert werden.

13. Verfahren nach einem der Patentansprüche 11 oder 12,
**dadurch gekennzeichnet, dass** in Schritt c) für Leerfunktionen Schreibvorgänge in der Datenverarbeitungseinheit auf nicht nutzbare Register/Speicherstellen (5') erfolgen.

14. Verfahren nach einem der Patentansprüche 9 bis 13,
**dadurch gekennzeichnet, dass** in Schritt a) die Leerfunktionen zufällig oder deterministisch erzeugt werden.

## Claims

1. Secure data processing unit having
a data/program instruction memory (1) for storing data/program instructions;
at least one instruction line (2) having a large number of function stages (21-26) for processing the data/program instructions; and
a control unit (3) for controlling the large number of function stages (21-26) of the instruction line (2),
a blank function generator (4, 4', 4") for producing blank functions in the data processing unit,
**characterized in that** the blank function generator has a blank instruction generator (4) in order to produce blank instructions, **in that** the blank function generator (4) produces a permissible program instruction and **in that** the blank function generator (4) derives the permissible program instruction from program instructions which are actually processed,
or **characterized in that** the blank function generator has a blank sequence generator (4') in order to activate at least one additional function stage (I-V) in the instruction line (2),
or **in that** both the data processing unit has bus interface function blocks (11, 12) for the connection of different bus systems (13, 14, 15), and the blank function generator has a blank bus transmission/reception generator (4") for producing additional transmission/reception processes to the bus interface function blocks (11, 12),
**characterized in that** a control unit is provided which, when an additional transmission/reception process occurs, terminates a bus access immediately before physically writing to a register/memory cell, or **in that** a register/memory cell is provided which cannot be used, but which is written to during an additional transmission/reception process.

2. Secure data processing unit according to Patent Claim 1, **characterized in that** the blank functions which are produced inherently have no effect on a desired program sequence.

3. Secure data processing unit according to Patent Claim 1, **characterized by** a blank function compensator (5, 5') in order to compensate for blank functions which are produced in the data processing unit, and which inherently do affect a desired program sequence.

4. Secure data processing unit according to Patent Claim 3, **characterized in that** the blank function compensator (5, 5') prevents write processes to register/memory locations which can be used by programs.

5. Secure data processing unit according to Patent Claim 4, **characterized in that** the blank function compensator (5) represents a part of the control unit (3) and, for blank functions, directly prevents write processes in the data processing unit.

6. Secure data processing unit according to Patent Claim 4, **characterized in that** the blank function compensator (5, 5') represents a part of the control unit (3) and has register/memory locations (5') which cannot be used by programs, in which, for blank functions, write processes in the data processing unit are made to the register/memory locations (5') which cannot be used.

7. Secure data processing unit according to Patent Claim 1, **characterized in that** the bus interface function blocks have high-speed data/program instruction buffer stores (11, 12).

8. Secure data processing unit according to one of Patent Claims 1 to 7,
**characterized in that** the blank function generator (4, 4', 4") produces the blank functions randomly or deterministically.

9. Method for protecting a data processing unit against external eavesdropping attacks, having the following steps:
a) production of blank functions in the data processing unit; and
b) execution of the blank functions in the data processing unit,
**characterized in that** blank instructions are produced in step a), with permissible program instructions being produced, and with the permissible program instructions being derived from program instructions which are actually processed, or
**characterized in that** additional function stages (I-V) in an instruction line (2) are activated in step a), or
**characterized in that** additional blank bus transmission/reception processes are produced to bus interface function blocks (11, 12),
**characterized in that** a bus access is terminated immediately before physically writing to a register/memory cell, or a register/memory cell (5') which cannot be used is written to.

10. Method according to Patent Claim 9,
**characterized by** the further step:
c) compensation for the executed blank functions in the data processing unit.

11. Method according to Patent Claim 10,
**characterized in that**, in step c), write processes to register/memory locations which can be used by programs are prevented.

12. Method according to Patent Claim 11,
**characterized in that**, in step c), write processes in the data processing unit are prevented directly.

13. Method according to one of Patent Claims 11 or 12,
**characterized in that**, in step c), for blank functions, write processes are carried out in the data processing unit to register/memory locations (5') which cannot be used.

14. Method according to one of Patent Claims 9 to 13,
**characterized in that** the blank functions are produced randomly or deterministically in step a).

## Revendications

1. Unité de traitement de données de sécurité ayant une mémoire de données / d'instructions de programme (1) pour la mémorisation de données / instructions de programme ;
au moins une ligne d'instruction (2) avec plusieurs étages fonctionnels (21 à 26) pour le traitement des données / instructions de programme ; et
une unité de commande (3) pour la commande des étages fonctionnels (21 à 26) de la ligne d'instruction (2) ;
un générateur de fonction fictive (4, 4', 4' ') pour la production de fonctions fictives dans l'unité de traitement de données ;
**caractérisée par le fait que** le générateur de fonction fictive comporte un générateur d'instruction fictive (4) pour la production d'instructions fictives, que le générateur d'instruction fictive (4) produit une instruction de programme autorisée et que le générateur d'instruction fictive (4) déduit l'instruction de programme des instructions de programme effectivement traitées,
ou **caractérisée par le fait que** le générateur de fonction fictive comporte un générateur de séquence fictive (4') pour l'activation d'au moins un étage fonctionnel supplémentaire (I à V) de la ligne d'instruction (2),
ou que l'unité de traitement de données comporte des blocs fonctionnels d'interface de bus (11, 12) pour la liaison de différents systèmes de bus (13, 14, 15) et le générateur de fonction fictive comporte un générateur d'émission / réception fictive sur bus (4'') pour la production d'opérations d'émission / réception supplémentaires sur les blocs fonctionnels d'interface de bus (11, 12),
**caractérisée par le fait qu'**il est prévu une unité de commande qui, en présence d'une opération d'émission / réception supplémentaire, interrompt un accès au bus juste avant l'écriture physique d'une cellule de registre / mémoire ou qu'il est prévu une cellule de registre / mémoire inutilisable dans laquelle on écrit en présence d'une opération d'émission / réception supplémentaire.

2. Unité de traitement de données de sécurité selon la revendication 1, **caractérisée par le fait que** les fonctions fictives produites n'ont intrinsèquement aucune influence sur une exécution de programme souhaitée.

3. Unité de traitement de données de sécurité selon la revendication 1, **caractérisée par** un compensateur de fonction fictive (5, 5') pour compenser dans l'unité de traitement de données des fonctions fictives produites qui ont intrinsèquement une influence sur une exécution de programme souhaitée.

4. Unité de traitement de données de sécurité selon la revendication 3, **caractérisée par le fait que** le compensateur de fonction fictive (5, 5') bloque des opérations d'écriture sur des positions de registre / mémoire utilisables par des programmes.

5. Unité de traitement de données de sécurité selon la revendication 4, **caractérisée par le fait que** le compensateur de fonction fictive (5) représente une partie de l'unité de commande (3) et, pour des fonctions fictives, bloque directement des opérations d'écriture dans l'unité de traitement de données.

6. Unité de traitement de données de sécurité selon la revendication 4, **caractérisée par le fait que** le compensateur de fonction fictive (5, 5') représente une partie de l'unité de commande (3) et comporte des positions de registre / mémoire (5') non utilisables par des programmes et que, pour des fonctions fictives, des opérations d'écriture dans l'unité de traitement de données s'effectuent sur les positions de registre / mémoire (5') non utilisables.

7. Unité de traitement de données de sécurité selon la revendication 1, **caractérisée par le fait que** les blocs fonctionnels d'interface de bus comportent des mémoires intermédiaires rapides de données / d'instructions de programme (11, 12).

8. Unité de traitement de données de sécurité selon l'une des revendications 1 à 7, **caractérisée par le fait que** le générateur de fonction fictive (4, 4', 4") produit des fonctions fictives de façon aléatoire ou déterministe.

9. Procédé de sécurisation d'une unité de traitement de données contre des piratages externes par écoute, avec les étapes suivantes :
a) production de fonctions fictives dans l'unité de traitement de données ; et
b) exécution des fonctions fictives dans l'unité de traitement de données ;
**caractérisé par le fait que**, dans l'étape a), on produit des instructions fictives, des instructions de programme autorisées étant produites et les instructions de programme autorisées étant déduites d'instructions de programme effectivement traitées,
ou **caractérisé par le fait que**, dans l'étape a), on active des étages fonctionnels supplémentaires (I à V) d'une ligne d'instruction (2),
ou que l'on produit des opérations d'émission / réception sur bus fictives supplémentaires sur des blocs fonctionnels d'interface de bus (11, 12),
**caractérisé par le fait que** l'on interrompt un accès au bus juste avant l'écriture physique dans une cellule de registre / mémoire ou que l'on écrit dans une cellule de registre / mémoire inutilisable (5').

10. Procédé selon la revendication 9, **caractérisé par** l'autre étape suivante:
c) compensation des fonctions fictives exécutées dans l'unité de traitement de données.

11. Procédé selon la revendication 10, **caractérisé par le fait que**, dans l'étape c), on bloque des opérations d'écriture sur des positions de registre / mémoire utilisables par des programmes.

12. Procédé selon la revendication 11, **caractérisé par le fait que**, dans l'étape c), on bloque directement des opérations d'écriture dans l'unité de traitement de données.

13. Procédé selon l'une des revendications 11 ou 12, **caractérisé par le fait que**, dans l'étape c), pour des fonctions fictives, on effectue des opérations d'écriture dans l'unité de traitement de données sur des positions de registre / mémoire inutilisables (5').

14. Procédé selon l'une des revendications 9 à 13, **caractérisé par le fait que**, dans l'étape a), on produit les fonctions fictives de façon aléatoire ou déterministe.
